# EUROPEAN PATENT APPLICATION

(11) **EP 3 196 001 A1**
(43) Date of publication of application: **26.07.2017**
(21) Application number: 16205804.4
(22) Date of filing: 21.12.2016
(51) Int. Cl.: B29C 67/00, B22F 3/105

(54) **IMPROVEMENTS IN ADDITIVE LAYER MANUFACTURING METHODS**

(30) Priority: 13.01.2016 GB 201600645
(71) Applicant: Rolls-Royce plc, London SW1E 6AT (GB)
(72) Inventor: Garry, Ian, Derby, Derbyshire DE24 8BJ (GB); Grafton-Reed, Clive, Derby, Derbyshire DE24 8BJ (GB)
(74) Representative: Rolls-Royce plc

(57) **Abstract**

An apparatus and method for performing an ALM process is described. A first energy beam source (1) provides an energy beam (1 b) which selectively melts a substrate powder (3) into a melt pool. A second energy beam source (2) provides an energy beam (2b) to heat condition substrate powder proximate to the melt pool. The path of the second energy beam (2b) is controlled by a controller (6) to oscillate independently of the path followed by the first energy beam (1b). The method may be applied to control and optimise heating and cooling rates of the sintered substrate during the ALM process enabling its microstructure to be controlled to suit the end use of the product and reduce the occurrence of residual stresses and consequent crack propagation.

## Description

The invention relates to the manufacture of components using additive layer manufacturing methods. In particular, the invention provides novel methods which result in improved fracture resistance of the finished component.

Additive layer manufacturing (ALM) methods are known. In these methods a component is built up layer by layer until the 3D component is defined. In some ALM methods, the layers are laid down from a continuous extrusion of material. In other methods, layers are created by selective treatment of layers within a mass of particulate material, the treatment causing cohesion of selected regions of particulates into a solid mass. In other methods, a liquid mass is selectively treated to produce solid layers. Specific examples of ALM methods include (without limitation); electron beam melting (EBM), direct laser deposition (DLD), laser engineered net shaping (LNS), selective laser melting (SLM), direct metal laser sintering (DMLS) and selective laser sintering (SLS).

As will be appreciated, one of the advantages with ALM manufacturing techniques is that it can provide near net-shape components resulting in little waste which require subsequent additional machining. One exception to this may be the inclusion of supporting features or geometries which enable the components to be made. One particular application of ALM methods is in the formation of components for use in a gas turbine engine. It will be appreciated that, as well as accurate dimensional tolerances, such components must have excellent and consistent mechanical properties to prevent failure of the component.

Control of heating and cooling cycles in many known ALM technologies is limited. The rate of heating and cooling of the substrate can impact significantly on the microstructure of the end product. For example, mechanical deficiencies in an ALM manufactured component can arise when residual stresses result from rapid cooling rates in the heated powder. In high temperature alloys, these residual stresses can result in propagation of cracks within the component during subsequent heat treatments and/or when in use in a high temperature application. It is known to heat treat components manufactured by ALM processes to mitigate the effects of residual stresses.

European Patent number EP724494B proposes the use of a main sintering beam and a defocussed "heating up" beam to control heating in the region of the main sintering beam as it travels and generate a pre-determined temperature gradient adjacent the main sintering beam. The defocussed beam follows the same path as the main sintering beam.

International Patent Application publication number WO 2015/120168 proposes the use of multiple energy beams which are arranged to follow one another. The energy beams provide different amounts of energy and are used to control the rate of melting and solidification in the region of the melt pool as the powder is sintered. The beams are controlled to move in unison, their paths defined together to create a thermal gradient adjacent the path followed by the main sintering beam as it travels. Hot spots produced by the beams are controlled to travel together a fixed, predefined distance apart from one another.

The present invention provides a method for performing an ALM process comprising; melting a substrate into a melt pool with a first energy beam, and
heat conditioning the substrate with a second energy beam, wherein
the second energy beam is controlled independently of the first energy beam to move in an oscillating motion across or around the path of the first energy beam.

There may be multiple second energy beams controllable independently of each other or as a collective to perform desired thermal conditioning steps.

The first and second energy beams may emit two different wavelengths. The first energy beam may emit a higher wavelength than the second energy beam. Optionally, the shape of the second energy beam may be adjusted to more accurately control heat management. For example, for larger areas, the energy beams may be focused to a rectangular or other shape most suitable to the application. Beam shaping may be achieved by means of shaped optical fibre elements. Beam shaping may be achieved by means of beam shaping optics, apertures, gratings, reflectors and other such optical elements. Optionally, deformable beam shaping optics may be controllably deformed to vary the beam shape of the energy beams as it travels.

The second energy beam may be controlled to oscillate in a periodic manner. Oscillation may be achieved by scanning in two dimensions across the plane in which the substrate is laid down. For example, the second energy beam may be controlled to follow a sinusoidal path which periodically crosses over the path of the first energy beam. The shape of the oscillation is not critical to achieving the benefits of the invention, alternative waveforms might, for example, be triangular or rectangular. In more complex embodiments, the second energy beam may be controlled to oscillate in three dimensions rather than just two. For example, the second energy beam may be controlled to move in a substantially helical pattern around the path of the first energy beam. As for the two dimensional embodiments, the precise shape of the oscillation is not critical.

Either or both of the first and second energy beam sources may be provided by a laser. An alternative source to a laser is an electron beam. The energy beams need not be provided by the same form of energy source. It will be appreciated that the second energy beam requires a greater degree of controllability to provide the desired oscillations. For example, the laser may be an IR laser with appropriate focussing optics. Alternatively, the laser may be a direct laser diode combined with a suitable refractive or reflective focussing element. In another option, a line or matrix of laser diodes of varying wavelengths may be employed to provide the second energy beam.

A controller may be programmed to selectively control illumination of the direct laser diodes in a pre-defined sequence whereby to achieve a desired control of the temperature gradient within the process zone in which the first energy beam is operational. For example, a controller might employ a micro-electro-mechanical system (MEMS) to adjust the direction of energy emission from an energy source. In some embodiments, a MEMS may be employed to move a reflective or refractive element relative to the energy source, or alternatively to move the source relative to the substrate.

With knowledge of the material of the substrate powder and geometry of the workpiece to be produced, the controller can be pre-programmed to control the heating and/or cooling rate of the substrate so as to reduce residual stress build up in the region of the melt pool and provide a more equi-axe grain structure in the finished workpiece. To achieve this, the second energy beam may be scanned at varying speeds and profiles to optimise cooling as the shape, cross section or the like of the workpiece defined by the path of the first energy beam changes.

The path and other characteristics of the second energy beam may be controlled to pre-heat and post-heat substrate adjacent the melt pool. In addition, the second energy beam may be controlled to thermally control already processed substrate distant from the melt pool. For example, the second energy beam may be controlled to revisit already solidified material of the workpiece to recondition the already solidified material. This control may be pre-programmed or may be part of an adaptive control system which monitors the condition of the already processed workpiece, identifying faults in the already processed material and responding to an identified fault by redirecting the second energy beam to the region of the identified fault to perform a reconditioning step.

In another aspect, the invention provides an apparatus for performing an ALM process comprising;
a first energy beam source for providing an energy beam to selectively melt a substrate powder into a melt pool;
a second energy beam source for providing an energy beam to heat condition substrate powder proximate to the melt pool; and
a controller for controlling oscillation of an energy beam emitted by the second energy beam source independently of the path followed by a beam emitted by the first energy beam source.

Optionally, the apparatus is configured to provide multiple first energy beams. The controller may be configured to operate a single second energy beam to oscillate about the paths of multiple first energy beams.

Optionally, the second energy beam source comprises a laser. Optionally, the second energy beam source comprises multiple focussed IR lasers, preferably high intensity broad wavelength lamps. The lamps may be selected to emit a suitable range of wavelengths suited to heat conditioning the powder substrate used in the ALM process. In an alternative, the second energy beam source comprises an array of laser diodes emitting a range of wavelengths of energy. The array may comprise a line of diodes, alternatively, the array is a matrix of diodes. The diodes may collectively be selected to emit a suitable range of wavelengths suited to heat conditioning the powder substrate used in the ALM process.

The controller may be programmable to define a path of the (or each) second energy beam. Where there are multiple second energy beams, the controller may control the multiple second energy beams independently of one another. The controller may incorporate adaptive optics. For example, the controller may be configured to control operation of a MEMS which in turn may reposition and/or deform a reflective or refractive element relative to the energy beam source. Alternatively, the MEMS may be controlled to move the source itself.

Specific characteristics of the second energy beam may further be controlled by selective use or adjustment of beam shaping optics. For example, the beam shaping optics are deformable and are controllably deformed by the controller to alter characteristics of the second energy beam.

Where an array of diode lasers is employed, the individual lasers may be switched on and off by the controller according to a pre-defined pattern.

For example, the substrate powder may comprise a ferrous or non-ferrous alloy or a ceramic. The workpiece may form the whole or part of a component for a gas turbine engine.

In another aspect, the invention comprises a gas turbine engine incorporating one or more components manufactured in accordance with the method of the invention.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Some embodiments of the invention will now be further described with reference to the accompanying Figures in which;
Figure 1 is a schematic showing the basic componentry of a first embodiment of apparatus arranged in use to manufacture a component using an ALM process in accordance with the invention;
Figure 2 is a schematic illustrating the paths which might be followed by first and second energy beams of an apparatus performing an ALM process in accordance with the present invention;
Figure 3 is a schematic which shows in more detail a relationship between the paths travelled by first and second energy beams of an apparatus performing an ALM process in accordance with the present invention;
Figures 4a), 4b) and 4c) show some exemplary alternative paths which might be followed by a second energy beam relative to a first energy beam of an apparatus performing an ALM process in accordance with the present invention;
Figure 5 is a schematic showing the basic componentry of a second embodiment of apparatus arranged in use to manufacture a component using an ALM process in accordance with the invention;
Figure 6 is a sectional side view schematic of a gas turbine engine which may comprise components made using an ALM process in accordance with the invention.

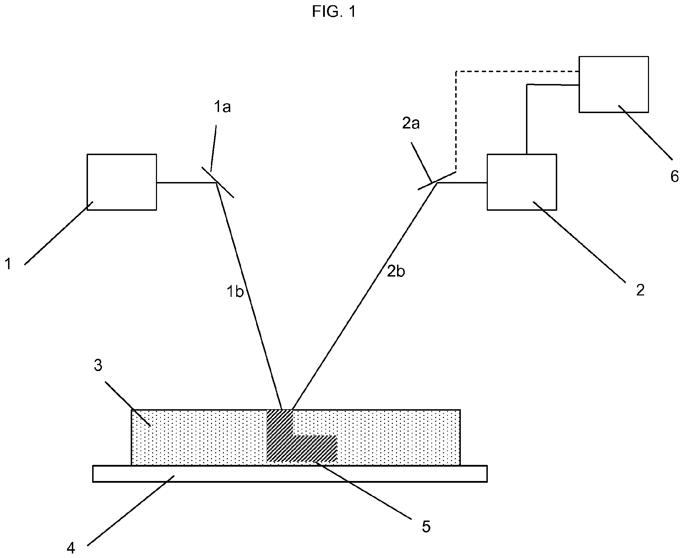

As can be seen in Figure 1, an apparatus suitable for performing the ALM process of the invention comprises a first energy beam source 1 with associated optics 1a for controlling the characteristics of an energy beam 1 b emitted by the source 1. Also provided is a second energy beam source 2 with associated optics 2a for controlling the characteristics of an energy beam 2b emitted by the source 2. Both beams 1 b, 2b are focussed on a bed 3 of a powdered substrate which is provided in sequential layers onto a plate 4. The first energy beam 1 b is configured to locally melt powder in the bed 3 which, as it cools, consolidates to form a workpiece 5. The second energy beam 2b is configured to heat powder in the locality of the powder melted by the first energy beam 1b whereby to control the rate of cooling of the melted powder and powder adjacent thereto.

Movement of the first energy beam 1b is controlled using prior known methods. For example, scanning optics could be used and whose path is pre-programmed using CAD/CAM data which defines the shape of the work piece. In another alternative, the first energy beam is held in a stable position whilst the bed carrying the substrate powder is moved relative to the first energy beam.

The apparatus further comprises a controller 6 associated with the second energy beam 2b. For example the controller is configured to move the second energy beam source 2. In addition or alternatively, the controller may be configured to adjust the optics 2a. Adjustment may involve repositioning of the optics 2a, or in the case of deformable optics, controlled deformation. A MEMS (not shown) may be operated by the controller to adjust the optics or reposition the second energy beam source 2.

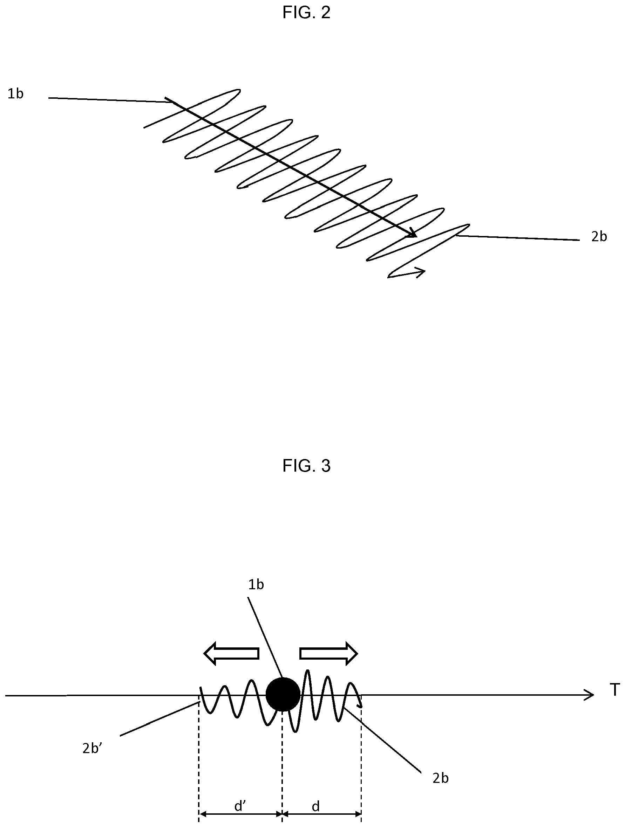

Figure 2 shows an example of paths followed by a first energy beam 1b and a second energy beam 2b in performing an embodiment of an ALM process in accordance with the invention. As shown, the first energy beam 1b follows a linear path which broadly would coincide with a melt pool created in the substrate powder. The second energy beam 2b follows an oscillating path which swings periodically from one side of the first energy beam 1 b to the other. The second energy beam 2b also travels just ahead of the first energy beam 1 b. The second energy beam 2b introduces less energy to the substrate than the first energy beam 1 b over a greater area and so reduces the thermal gradient between the melt pool and surrounding powders. The cooling rate in this region and hence the local microstructure can be controlled, reducing the formation of residual stresses and consequent crack propagation in the finished component.

Whilst Figure 2 shows the concept of the invention in a simplistic, two-dimensional form, it will be appreciated that heat transfers through the substrate powder in three dimensions.
Figure 3 illustrates oscillation of the second energy beam 2b with respect to the first energy beam 1 b in a plane orthogonal to that illustrated in Figure 2 as time T progresses. As can be seen in Figure 3, the second energy beam 2b oscillates in an up and down as well as side to side motion with respect to the direction of travel of the first energy beam 1b. Thus the second energy beam 2b not only influences the thermal gradient in material adjacent the melt pool in the plane in which the first energy beam 1b is travelling, but simultaneously influences the thermal gradient in already processed powder in planes below the plane in which the first energy beam 1 b is currently travelling. Thus, as well as pre-heating powder about to be melted by the first energy beam 1b, the second energy beam 2b, controls the rate at which already processed powder is cooled.

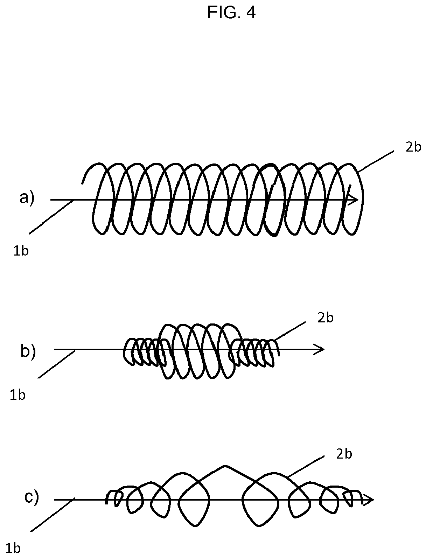

The path followed by the second energy beam 2b with respect to the path of the first energy beam 1b may be follow a consistent pattern or may incorporate variations. Figure 4a illustrates a simple, consistent pattern where the second energy beam 2b is programmed essentially to follow a helical path around the path of the first energy beam 1b. Figure 4b shows an alternative where the helical path periodically increases and decreases in diameter. Figure 4c shows an alternative where the helix in a helical path gradually increases in diameter to a maximum and decrease gradually to a minimum over a period of time. In practice, more complex three dimensional patterns can be defined for the second energy beam 2b changing the quantity of heat, the rate of heating and the area heated by the second energy beam to address changes in the path of the first energy beam 1b. For example, where the first energy beam 1 b is sintering an outer wall of a component, the path of the second beam 2b may be primarily directed to controlling the cooling rate of substrate powder which will become part of the body of the component, avoiding cooling of powder in the same layer which is not to be sintered and likely to be recycled on completion of the process.

Changes in the second energy beam 2b path may also reflect critical parts of the component geometry, particularly attending to controlling the heating and cooling rate in regions which have a high susceptibility to residual stress, for example small radii or angled sections.

By way of example, the following describes specific parameters which might be used for the first and second energy beams when performing an ALM process in accordance with the invention to manufacture a component from a high temperature alloy suited to use in a gas turbine engine.

The energy beam sources may each comprise lasers having a power range from about 100W to 2 kW. The energy output by a beam is a function of the exposure time and the power of the beam. The required energy output varies from one material to another. It will be within the knowledge and ability of the skilled addressee to select appropriate energy beam powers and exposure times to provide the required energy output for a known substrate material.

The first energy beam laser is operable in a velocity range of from about 0.2m/s to about 3 m/s. Typically it operates at a constant velocity of about 1 m/s. The second energy beam laser is arranged to either lead or follow or both, the first energy beam laser at a controlled velocity which may be significantly different to the first beam velocity, to achieve the process requirement i.e. preheating or the control of cooling rate or both.

The second energy beam velocity could be in the range from about 1 m/s to about 7m/s. The velocity for the second beam may be slower than for the first beam depending on the application requirements.

Referring back to Figure 3, the first energy beam laser 1 b is travelling at an absolute velocity whilst the second energy beam oscillates between ahead of the first energy beam and behind the first energy beam. The second energy beam travels a maximum distance d ahead of the first energy beam pre-heating the substrate) and a maximum distance d' behind the first energy beam (post-heating the substrate and controlling its rate of cooling). The distances d and d' are typically between 1 mm and 20mm and may be the same or different. Depending on the specific properties of the substrate material, in some cases it may be beneficial to traverse the second energy beam further in one of the post-heating or pre-heating direction. Again, with knowledge of the substrate material, it will be within the ability of the skilled addressee to determine (perhaps through trials or calculation) optimum distances d and d' for a specific application of the process.

As previously stated, the frequency of the oscillation of the second energy beam may be periodic and follow a consistent pattern. This is most likely where the first energy beam is sintering a straight line at the centre of the component geometry where the impact of the first energy beam on the substrate and component is consistent. However, a periodic oscillation is rarely optimal for the entire ALM process. Hence the pattern followed by the second energy beam will be varied and adapted, for example, to address significant changes in the geometry or thickness of the component whose shape is defined by the path followed by the first energy beam.

Where the second energy beam is controlled to oscillate periodically, the frequency of the oscillation is typically from about 1 oscillation to about 30 oscillations per second.

Various approaches might be taken to control the second energy beam path. Optional control strategies include;
- Deriving a path from mathematical modelling of the specific application
- Referring to a previously collated database of parameters
- Using a real time monitor of the temperature of the material being processed
- Any combination of the above strategies

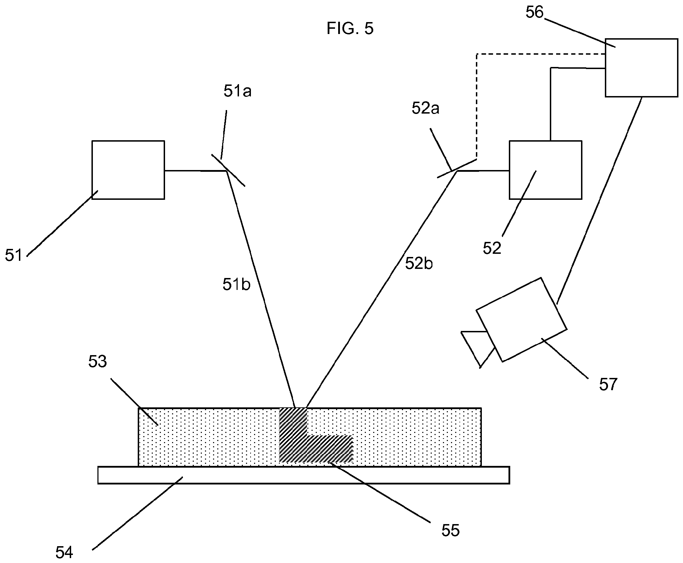

In one advantageous embodiment shown schematically in Figure 5, apparatus for performing the ALM process of the invention includes a temperature measuring system which feeds back temperature data to the controller. The controller may then be configured adaptively to control the path and/or other parameters of a second energy beam to ensure optimal heating and cooling rates for identified regions of the sintered powder.

In common with the embodiment of Figure 1, the embodiment of Figure 5 includes; a first energy beam source 51 with associated optics 51 a for controlling the characteristics of an energy beam 51 b emitted by the source 51. Also provided is a second energy beam source 52 with associated optics 52a for controlling the characteristics of an energy beam 52b emitted by the source 52. Both beams 51 b, 52b are focussed on a bed 53 of a powdered substrate which is provided in sequential layers onto a plate 54. The first energy beam 51 b is configured to locally melt powder in the bed 53 which, as it cools, consolidates to form a work piece 55. The second energy beam 52b is configured to heat powder in the locality of the powder melted by the first energy beam 51 b whereby to control the rate of cooling of the melted powder and powder adjacent thereto.

The apparatus further comprises a controller 56 associated with the second energy beam 52b. For example the controller is configured to move the second energy beam source 52. In addition or alternatively, the controller may be configured to adjust the optics 52a.

Adjustment may involve repositioning of the optics 52a, or in the case of deformable optics, controlled deformation. A MEMS (not shown) may be operated by the controller to adjust the optics or reposition the second energy beam source 52. A thermal imaging device 57 is arranged to monitor temperatures in the powder bed 53 during the ALM process. Data from the thermal imaging device 57 is input to the controller 56 which then adaptively controls the path, oscillation and/or other parameters of the second energy beam 52b to optimise heating and cooling of processed powder.

A variety of known temperature measurement systems are known which could be adapted into a control system as described above. For example (without limitation), the device may be a thermal imaging device, a thermal camera, a radiation detector (e.g. infra- red)or an array of suitably positioned thermocouples. Such a temperature measurement system may measure a temperature of the targeted material directly, or may measure temperatures adjacent (including in a space above the deposited substrate) the targeted material. In the latter case, the controller may perform calculations to determine the temperature at the targeted material using known characteristics of the material.

The temperature measurement system may be configured to map various zones of the powder bed. This could be used advantageously where multiple second energy beams are employed. For example, one of the second energy beams could be controlled to travel with the first energy beam controlling the heating and cooling rate of powder in the region of the melt pool whilst another is controlled to effect thermal gradient management in already sintered zones. Such a temperature measurement system may comprise multiple temperature measuring devices.

Additional energy beams may be employed which may be moved in an oscillating manner. For example, such additional energy beams may be focussed on defined zones of the powder bed and their beam shape/ intensity controlled to maintain a desired thermal profile in that zone. Optionally any of the energy beams may each have an associated temperature measuring device, the energy beam and device being configured and controlled to manage thermal profiles in a defined zone.

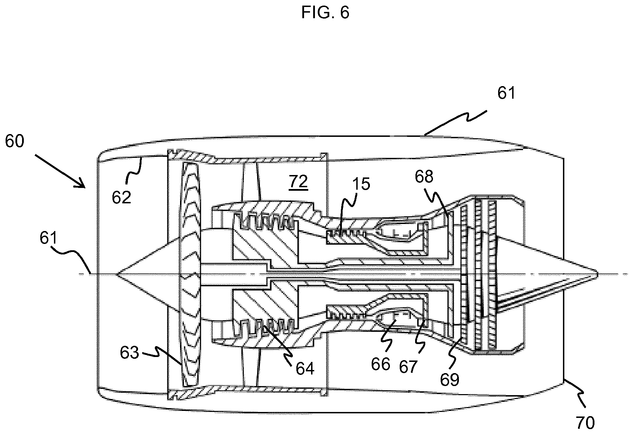

With reference to Figure 6, a gas turbine engine is generally indicated at 60, having a principal and rotational axis 61. The engine 60 comprises, in axial flow series, an air intake 62, a propulsive fan 63, an intermediate pressure compressor 64, a high-pressure compressor 65, combustion equipment 66, a high-pressure turbine 67, and intermediate pressure turbine 68, a low-pressure turbine 69 and an exhaust nozzle 70. A nacelle 71 generally surrounds the engine 60 and defines both the intake 62 and the exhaust nozzle 70.

The gas turbine engine 60 works in the conventional manner so that air entering the intake 62 is accelerated by the fan 63 to produce two air flows: a first air flow into the intermediate pressure compressor 64 and a second air flow which passes through a bypass duct 72 to provide propulsive thrust. The intermediate pressure compressor 64 compresses the air flow directed into it before delivering that air to the high pressure compressor 65 where further compression takes place.

The compressed air exhausted from the high-pressure compressor 65 is directed into the combustion equipment 66 where it is mixed with fuel and the mixture combusted. The resultant hot combustion products then expand through, and thereby drive the high, intermediate and low-pressure turbines 67, 68, 69 before being exhausted through the nozzle 70 to provide additional propulsive thrust. The high 67, intermediate 68 and low 69 pressure turbines drive respectively the high pressure compressor 65, intermediate pressure compressor 64 and fan 63, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method for performing an ALM process comprising;
melting a substrate (3) into a melt pool with a first energy beam (1b), and heat conditioning the substrate (3) with a second energy beam (2b), wherein the second energy beam (2b) is controlled independently of the first energy beam (1b) to move in a controlled motion which is oscillating or reciprocating across or around the path of the first energy beam.

2. A method as claimed in claim 1 wherein the second energy beam (2b) is controlled to oscillate or reciprocate in a periodic manner.

3. A method as claimed in claim 1 or claim 2 wherein the second energy beam (2b) is controlled to oscillate or reciprocate in two dimensions.

4. A method as claimed in claim 1 or claim 2 wherein the second energy beam (2b) is controlled to oscillate or reciprocate in three dimensions.

5. A method as claimed in any preceding claim wherein the second energy beam (2b) is controlled to follow a pre-defined path derived from mathematical modelling of the ALM process prior to performance of the process.

6. A method as claimed in any of claims 1 to 4 wherein the second energy beam (2b) is adaptively controlled responsive to temperature data collected by a temperature measuring device collecting temperature data for the substrate during performance of the ALM process.

7. A method as claimed in any preceding claim wherein the substrate (3) is selected from a ferrous or non-ferrous alloy powder or a ceramic powder, or any combination thereof.

8. A method as claimed in any preceding claim wherein in one or each of the first (1 b) and second (2b) energy beams are provided by a laser.

9. An apparatus for performing the ALM process of any preceding claim comprising;
a first energy beam source (1) for providing an energy beam (1b) to selectively melt a substrate powder (3) into a melt pool;
a second energy beam source (2) for providing an energy beam (2b) to heat condition substrate powder proximate to the melt pool; and
a controller (6) for controlling oscillation or reciprocation of an energy beam (2b) emitted by the second energy beam source (2) independently of the path followed by a beam (1b) emitted by the first energy beam source (1).

10. An apparatus as claimed in claim 9 wherein the second energy beam source (2) comprises a laser mounted in a moveable head and the controller (6) is configured to move the head and hence the second energy beam (2b) with respect to the substrate (3) and/or the first energy beam (1 b).

11. An apparatus as claimed in claim 9 or claim 10 further comprising optics (2a) for controlling the beam shape of the second energy beam (2b) wherein the controller (6) is configured to adjust the optics (2a).

12. An apparatus as claimed in claim 11 wherein the optics are deformable and adjusting by the controller involves deforming the optics.

13. An apparatus as claimed in any of claims 9 to 12 further including a MEMS device controllable by the controller (6) to move the second energy beam (2b).

14. An apparatus as claimed in any of claims 9 to 13 further including a temperature measuring device for monitoring the temperature of the substrate wherein the temperature measuring device is configured to collect temperature data and input the collected data to the controller and the controller is configured to adaptively control the second energy beam (2b) responsive to the collected temperature data.

15. An apparatus as claimed in claim 9 wherein the second energy beam source (2) comprises multiple laser diodes and the controller (6) is configured to selectively control illumination of the diodes.

16. An apparatus as claimed in claim 9 wherein the laser diodes emit energy in a range of wavelengths.

17. An apparatus as claimed in any of claims 9 to 16 comprising multiple second energy beams (2b) each controllable independently of the others.

18. An apparatus as claimed in any of claims 9 to 17 further comprising one or more additional energy beams controllable independently of the first (1 b) and second (2b) energy beams and wherein the control does not involve oscillation of the additional energy beam(s) but involves adjusting characteristics of the beam(s).

19. An apparatus as claimed in claim 18 wherein at least one of the additional energy beams is controlled to recondition substrate already sintered in a region distant from the melt pool currently being created by the first energy beam.

20. A gas turbine engine incorporating one or more components manufactured in accordance with the method of any of claims 1 to 8.
